# EUROPEAN PATENT APPLICATION

(11) **EP 1 464 236 A1**
(43) Date of publication of application: **06.10.2004**
(21) Application number: 03007219.3
(22) Date of filing: 31.03.2003
(51) Int. Cl.: A23N 15/00, B07C 5/08

(54) **Method and system for processing a collection of products**

(71) Applicant: Coöperatieve Telersvereniging Spruiten U.A., 2991 XJ Barendrechts (NL)
(72) Inventor: Backus, Stefanus Michael Marie, 5914 CX Venlo (NL); Kleywegt, Leendert, 3297 EL Puttershoek (NL)
(74) Representative: Bartelds, Erik

(57) **Abstract**

The invention relates to a method for processing a collection of spherical or tuberiform products, comprising of isolating the products in the collection, detecting the shape and/or the size of each product and processing each detected product subject to the detected shape and/or size, wherein the isolating and processing is performed mechanically and the detection electronically.

The processing can be a cutting operation, the position of the product can be determined during the detection and an end part of the product can be cut off depending on the determined position.

The invention also relates to a system for performing this method, comprising a device for isolating the products in the collection, a device placed in series with the isolating device for detecting the shape and/or size of each product, which detecting device is connected for signal generation to means for controlling the processing, and a device for processing each detected product which is placed in series with the detecting device and connected controllably to the control means.

The detecting device can comprise a camera directed at the transport path of the products, in addition to two mirrors arranged on either side of the transport path.

The invention further relates to an isolating device, a detecting device, a processing device, control means, a separating device and a post-processing device which are evidently intended for use in such a system.

## Description

The invention relates to a method for processing a collection of products. The invention relates particularly to a method for processing spherical or tuberiform agricultural products, such as for instance sprouts.

Nowadays, sprouts are harvested mechanically by being removed from their stem. After harvesting, each sprout displays a stalk-like protrusion which must be removed before the sprout can be traded in the market or post-processed. The outer leaves of the sprout must herein also be removed, whereby the sprout acquires a fresh appearance attractive to consumers. These processes, known under the collective name of "preparation", have been carried out manually heretofore. One sprout at a time is herein taken out of the collection, the stalk cut therefrom and the outer leaves, which are no longer attached due to removal of the stalk, are then removed from the sprout, for instance by being rolled in the hand. Preparation of sprouts is monotonous work which has to be carried out at a relatively high speed and in a relatively short time, since cultivation of sprouts is seasonal and the harvested sprouts must therefore be supplied and prepared for post-processing within a relatively short period of time. Finding sufficient suitable temporary workers to prepare sprouts is increasingly a problem.

The invention therefore has for its object to provide a method for processing products, like e.g. spherical or tuberiform agricultural products, in particular a method for preparing sprouts, whereby it is not necessary to resort to human labour.

The invention provides for this purpose a method for processing a collection of products comprising of isolating the products in the collection, detecting the shape and/or the size of each product and processing each detected product subject to the detected shape and/or size, wherein the isolating and processing is performed mechanically and the detection electronically.

A large quantity of sprouts can be prepared relatively precisely in a short period of time by thus isolating the sprouts mechanically, then determining the shape and dimensions thereof by electronic means and finally processing the sprouts by mechanical means subject to this detection. The term 'processing' as used in this secification is meant to denote any treatment by which one or more properties of the products are altered.

Preferably applied variants of the method according to the invention form the subject-matter of the subclaims 2-7.

The invention also has for its object to provide a system with which the above described method can be applied. To this end the invention provides a system comprising a device for isolating the products in the collection, a device placed in series with the isolating device for detecting the shape and/or size of each product, which detecting device is connected for signal generation to means for controlling the processing, and a device for processing each detected product which is placed in series with the detecting device and connected controllably to the control means.

Preferred embodiments of the system according to the invention are described in the sub-claims 9-33.

Finally, the invention further relates to an isolating device, detecting device, processing device, separating device and post-processing device for use in the system as described above, in addition to control means therefor.

The invention will now be elucidated on the basis of an embodiment, wherein reference is made to the annexed drawing, in which:
figure 1 is a schematic perspective side view of an embodiment of the system according to the invention,
figure 2 is a schematic cross-sectional view along the line II-II in figure 1,
figure 3 is a schematic cross-sectional view along the line III-III in figure 1,
figure 4 is an illustration of a recorded image produced by the detecting device of the system,
figure 5 shows a schematic view of the connection of the control means to the other components of the system, and
figures 6 and 7 show flow diagrams elucidating the operation of the control means.

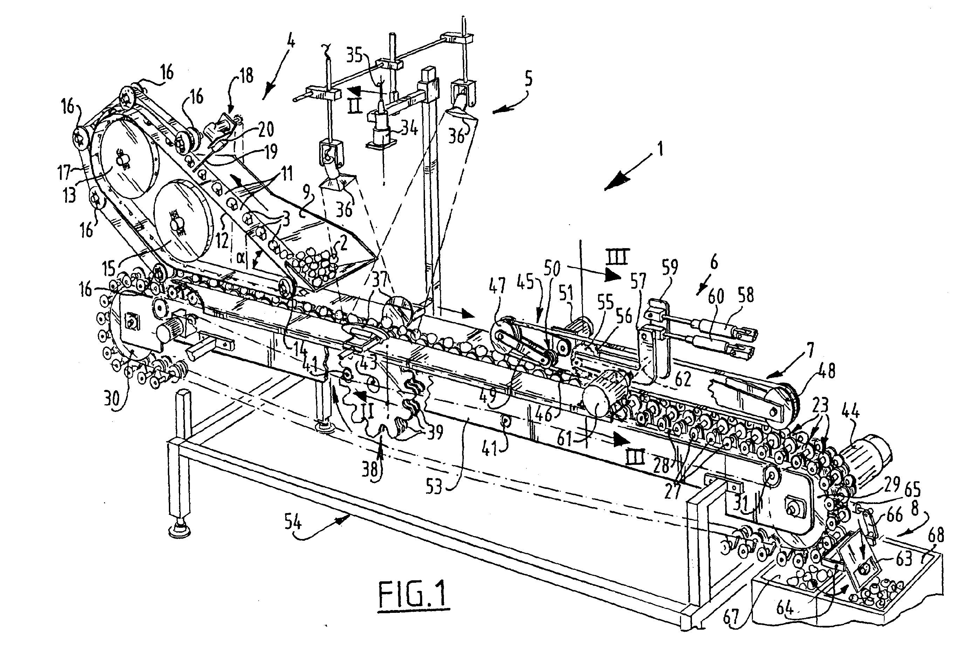

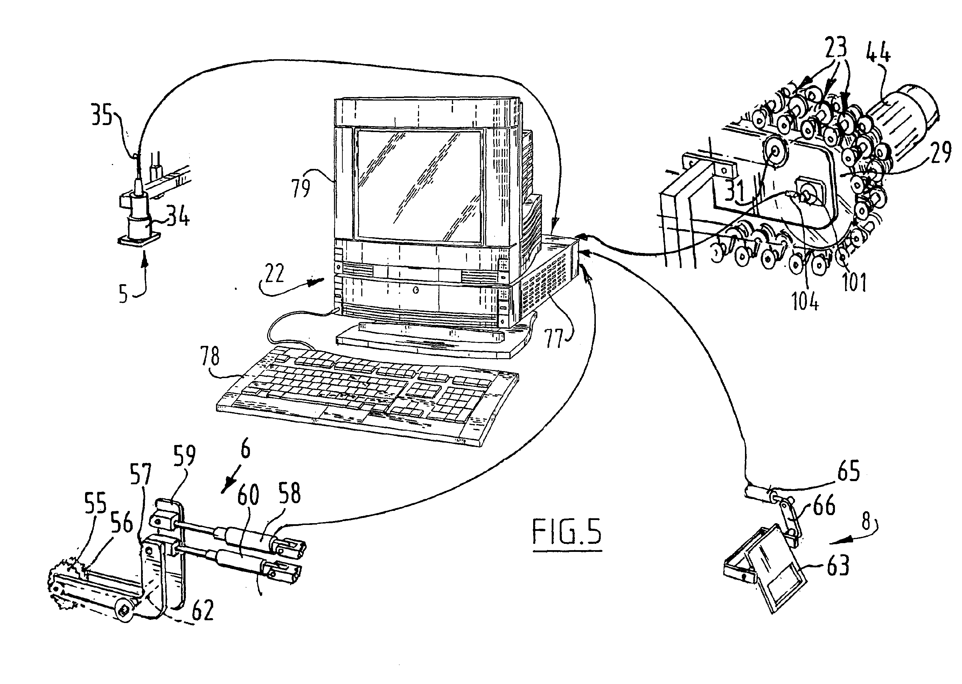

A system 1 (figure 1) for processing a collection 2 of spherical or tuberiform products, in particular sprouts 3, is provided with a device 4 for isolating products 3, a device 5 connected in series to the isolating device 4 for detecting the shape and/or size of the products, a device 6 connected in series to detecting device 5 for performing the actual processing on the products, a post-processing device 7 connected in series to processing device 6 and a device 8 connected in series to post-processing device 7 for separating processed and non-processed products. The different devices are received in a common frame 54. Detecting device 5 is further connected for signal generation to control means 22, for instance in the form of a suitably programmed computer or PLC (figure 5). Isolating device 4 is formed by a compartment conveyor 10 consisting of a number of mutually adjoining compartments 11 which are suitable in principle for receiving a single product 3. Compartment conveyor 10 runs through a bunker 9 in which the collection of products 2 is arranged. Conveyor 10 is provided for its driving with a chain 12 which is guided over a number of chain wheels 13, 14, 15. Conveyor 10 has a booster part which is moved upward at an angle α and at the end of which means 18 are present for removing excess products 3 out of each compartment 11. These removing means 18 are formed by a pusher member 19 which is rotatable round a shaft 20 and driven synchronously with compartment conveyor 10. At each rotation this pusher member 19 as it were sweeps along behind the upper wall of each compartment 11 and herein pushes out of compartment 11 back into bunker 9 any products 3 which may be heaped one on top of another. Thus is ensured that no more than one product 3 is present in each compartment after it has passed through removing means 18. In order to hold product 3 in the compartment, the part of the compartment conveyor 10 beyond removing means 18 is enclosed by a tracking belt 17 which is guided round a number of guide rollers 16. This closing belt 17 forms a tracking closure of compartments 11, whereby products 3 are held fixedly therein and not subjected to any further relative movement. At the end of belt 17 the products 3 are released from compartment conveyor 10 at the position of chain wheel 15 and fall into a transport path 21.

Transport path 21 is formed by a large number of diabolo-shaped transporting elements 23 which are connected on either side to a transporting chain 26. The diabolo-shaped transporting elements 23 are each mounted for rotation round a shaft 24 in supports 25 connected to transporting chains 26. In order to orient products 3 on diabolos 23, these latter are driven rotatably. Arranged for this purpose on the end of rotation shaft 24 is a chain wheel 27 which co-acts with a drive chain 28. Transporting chains 26 with diabolos 23 mounted thereon run over two chain wheels 29, 30, wherein chain wheel 29 is driven by a motor 44. Drive chain 28 runs over two chain wheels 31 and 32 and along two tensioning wheels 41 and is driven by a motor 33. By now varying the speed at which chain 28 is driven relative to the circulating speed of transporting chains 26, the diabolos 23 can be rotated forward or backward as desired during transport or be stationary in the case chains 26 are running at the same speed. With a suitably chosen rotation movement of diabolos 23 the products 3 transported thereon are oriented substantially horizontally, i.e. parallel to the rotation shaft 24 of diabolo 23, wherein the stalk-like extremity 70 points to the one side and the round crown to the other.

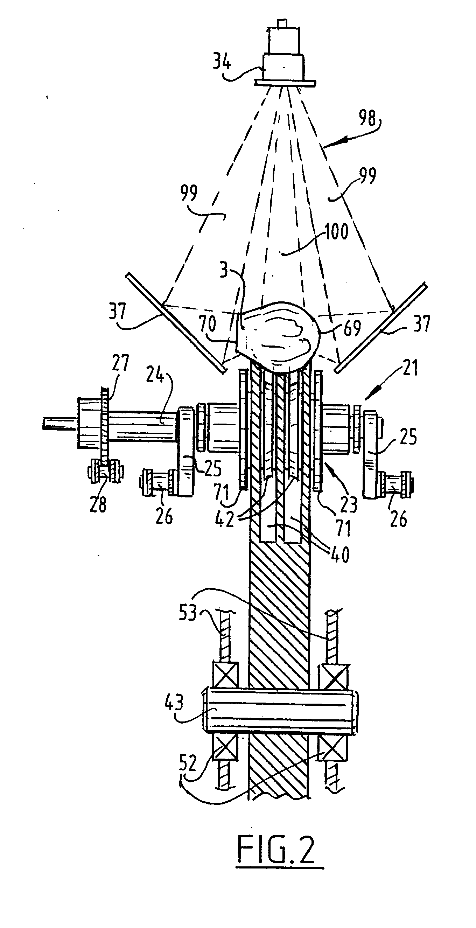

Products 3 are carried by transport path 21 successively past the detecting device 5, processing device 6 and further-processing device 7 to the separating device 8. Detecting device 5 herein consists of a camera directed at transport path 21 and connected via a cable 35 to control means 22 (figure 5), exposure means in the form of two lamps 36 directed at transport path 21, in addition to mirrors 37 which are arranged on either side of transport path 21 and placed in the field of view 98 of camera 34 (figure 2). This field of view 98 herein consists in fact of three sub-fields, i.e. two edge fields 99 which cover the end surfaces of product 3 via mirrors 37 and a central field 100 enabling a direct recorded image of the entire product 3.

In order to enable a good recorded image of the product from the end surfaces, product 3 is carried slightly upward relative to transport path 21 at the position of detecting device 5 (figure 2). Arranged for this purpose under the transport path is a star wheel 38 which is rotatably mounted by means of bearings 52 in wall parts 53 of frame 54 arranged under transport path 21. The teeth 39 of star wheel 38 engage in the spaces between the diabolo-shaped transporting elements 23. Star wheel 38 is thus driven rotatably on its shaft 43 by transport path 21. In order to enable a sufficient lifting height without having to form excessively large openings between the successive diabolos 23, the diabolos 23 and teeth 39 each take an interrupted form, so that they can as it were move through one another. Star wheel 38 has for this purpose at the position of each tooth 39 two recesses 40 through which can pass the inner discs 42 of diabolos 23. The outer discs 71 of the diabolos are placed so far outward that they enclose teeth 39. Each product 3 is thus supported at the location of detecting device 5 by a tooth 39 of star wheel 38, whereby it is held between the two mirrors 37 and camera 34 can make a clear recorded image of the top side and both end surfaces 69, 70 of product 3. This recorded image is passed to control means 22 which determines from the detection the position of product 3, and processing device 6 and separating device 8 are controlled on the basis of the detected position.

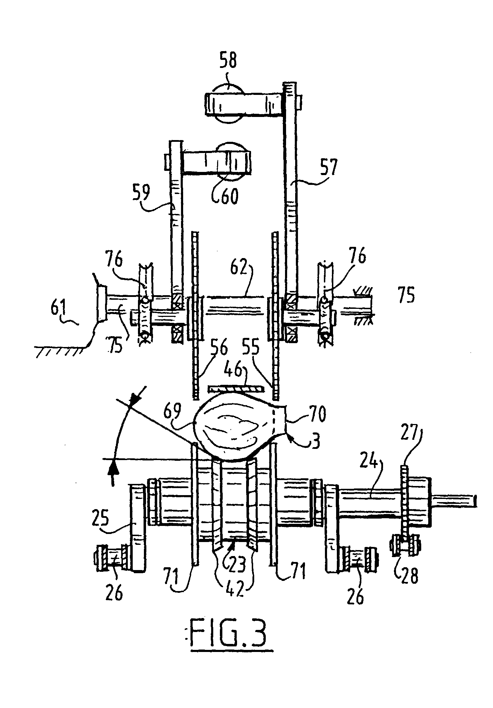

A pressing mechanism 45 is further placed in front of processing device 6. This pressing mechanism is formed by a pressure belt 46 which is guided over two reversing rollers 47 and 48 and which is driven by a motor 51 via a belt drive. Pressing mechanism 45 further comprises a pressing arm 49 which supports the actual pressing roller 50. The belt 46 is pressed with force against product 3 by this pressing arm and roller 49, 50, for instance as a result of the weight of arm 49 or by means of a spring acting thereon, whereby this product is fixed for the processing. The processing device 6 itself is a cutting device having in the shown embodiment two rotatable cutting members 55, 56 which are each arranged on a pivot arm 57, 59 and are thus movable between a rest position and an operating position (shown in dash-dot lines in figure 5) in which they protrude into the transport path 21 of products 3. Cutting members 55, 56 are each arranged on a rotation shaft 75 (figure 3) and are driven by a collective motor 61 via belts 76. The two pivot arms 57, 59 are pivotable on a collective shaft 62 and are each operated by a pneumatic cylinder 58, 60. Depending on the detected position of product 3, one of the cylinders 58, 60 is activated by control means 22, whereby the associated pivot arm 57, 59 is pivoted and the rotating cutting member 55, 56 mounted thereon is carried into the path of product 3 in order to sever therefrom the stalk-like protrusions 70 (figure 3). When this stalk-like extremity is removed, the outer leaves of product 3 are also somewhat detached and can subsequently be removed by the post-processing device 7 by means of rubbing treatment. Post-processing device 7 is herein formed by the same belt 46 which also forms part of pressing mechanism 45. By varying the speed of this belt relative to the displacement speed of diabolo-shaped transporting elements 23 and their rotation speed, the products 3 from which stalk-like protrusion 70 has been removed are subjected to rubbing, whereby the loosely attached outer leaves are removed.

Finally, the processed and further-processed products 3 reach the separating device 8 which is likewise controlled by control means 22. Separating device 8 makes a distinction between processed and non-processed products which are collected separately in two containers 67, 68. In the shown embodiment, separating device 8 comprises a flap 63 which can swivel round a shaft 64 and the swivelling movement of which is driven by a cylinder via an arm 66.

Control means 22 are formed for instance by a Personal Computer 77 connected to a keyboard 78 and a display 79 (figure 5). By means of a cable 35 this computer 77 is connected to camera 34 in both controlling and controllable manner, while computer 77 further receives signals from an encoder 104 connected to shaft 101 of chain wheel 29 of transport path 21. Computer 77 is connected in controlling manner to cylinders 58, 60 of processing device 6 and to cylinder 65 of separating device 8. Control takes place on the basis of the recorded image 74 of product 3 made by camera 34. This latter can be a commercially obtainable digital camera, a so-called CCD camera. It is possible herein for the camera to be adapted to make a recorded image only when a product 3 lies within the field of view 98 by synchronizing the picture frequency of the camera with the transporting speed of transport path 21, although in the shown embodiment use is made of a simpler camera 34 with a fixed picture frequency.

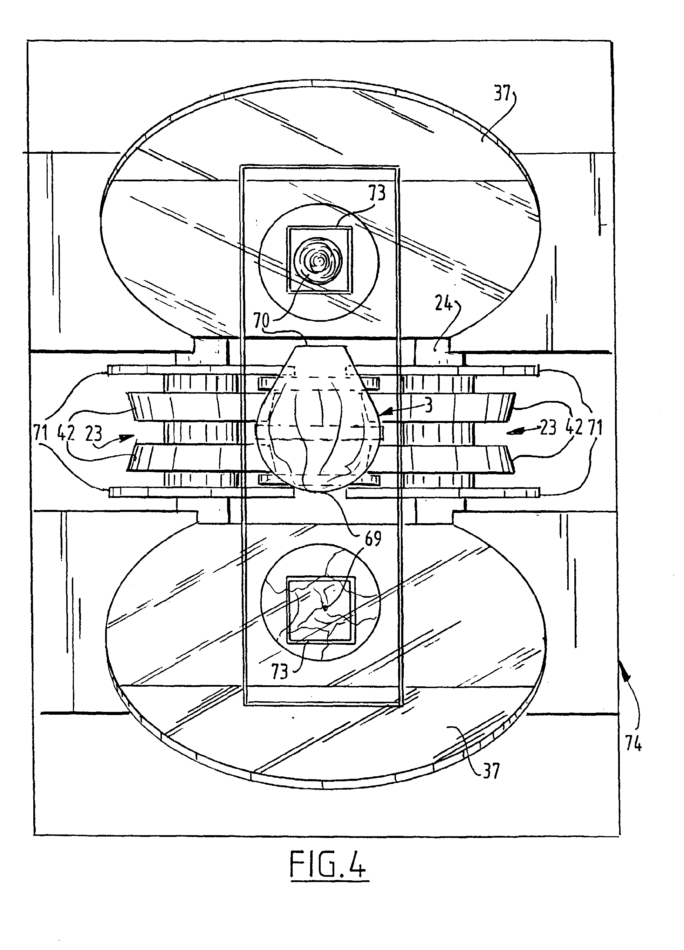

Because this frequency is thus not synchronized with the transporting speed of products 3, the position of a product 3 in field of view 98, and therefore also in the resulting recorded image 74, will differ from product to product. In order to determine the position of each product 3 in a recorded image 74 use is therefore made of the data from encoder 104 which is representative for the speed of products 3. This is executed by computer 77. The part of recorded image 74 in which product 3 is situated is herein framed by a border 72 (figure 4) and the remaining processes are carried out only on this part of recorded image 74. The centre of the detected product 3 in top view is determined by numerical means, as is the surface area and roundness of the product. The roundness is determined herein by calculating the ratio of the dimensions of the product respectively parallel to the diabolo shaft 24 and transversely thereof. In addition, the part-images of the end surfaces formed via mirrors 37 are framed by an edge 73 and these parts of the recorded image are subjected to a separate image processing. The contrast inside the framed parts 73 of recorded image 74 is herein determined using a so-called sobel filter. It is known that in head-form products the stalk side where the leaves converge displays considerably more contrast than the somewhat spherical side located opposite, where the leaves are thinner and the transitions between them therefore less pronounced.

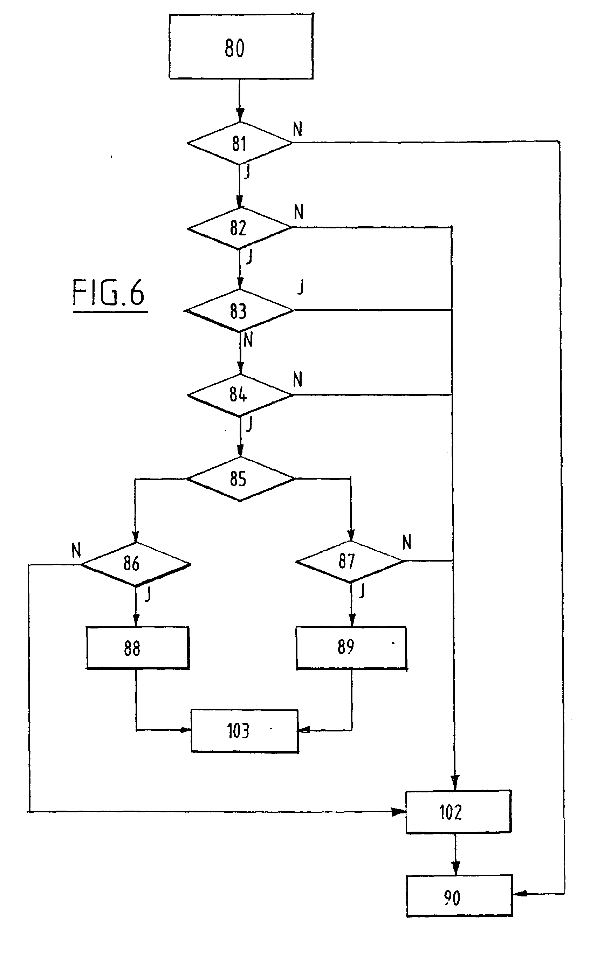

On the basis of this detection the position of product 3 can be ascertained by means of a simple algorithm (figure 6) and the processing therefor determined. When this detection has been carried out (block 80), it is possible to determine in block 81 whether a product 3 has been detected in recorded image 74 or whether only an empty part of transport path 21 has been detected. When no product 3 is detected, the program jumps to block 90 where it is decided that no processing is required and the processing device is therefore neutralized. When however a product 3 is detected in recorded image 74, a check is made in block 82 whether this product is centred. If this is not the case, the product cannot be processed properly. The program then jumps to block 102 where the separating device is placed in the position for removing the non-processed product. If the product is sufficiently centred to enable processing, a check is made in block 83 whether it is not too round. If the product is too round the position thereof cannot be established with sufficient certainty. In that case the program again jumps to block 102, whereby separating device is placed in the position for removal, and then to block 90 whereby the processing device is neutralized. If the product is not too round, a check is made as to whether it is sufficiently large. Products which are too small cannot be processed properly either. If the product is not large enough, the program then jumps to block 102 and subsequently to block 90.

If the product is large enough, the contrast values of the framed parts 73 of recorded image 74 are then compared in block 85. If the contrast value on the lefthand side (for instance the top side in the shown recorded image 74) is greater than the contrast value on the right-hand side, the program jumps to block 86. If this is not the case, the program then jumps to block 87. A check is made in both blocks 86 and 87 whether the found contrast values differ sufficiently from each other, since if this is not the case it can again not be established with sufficient certainty which side of the product contains the stalk-like protrusion, so that no cutting operation will then take place.

The program jumps in that case to block 102 in order to set the separating device in the correct position and then to block 90 to disable the processing device. If sufficient difference in contrast is determined, the program then jumps from block 86 to block 88, whereby the left-hand cutting member is activated to cut off the stalk-like protrusion which, according to the detection in block 85, is situated on the left-hand side, while the program jumps from block 87 to block 89 to activate the right-hand cutting member when the contrast value in the right-hand part of the recorded image is higher. The program then jumps from these blocks 88 and 89 to block 103, where the separating device is switched to the position for selecting the processed products.

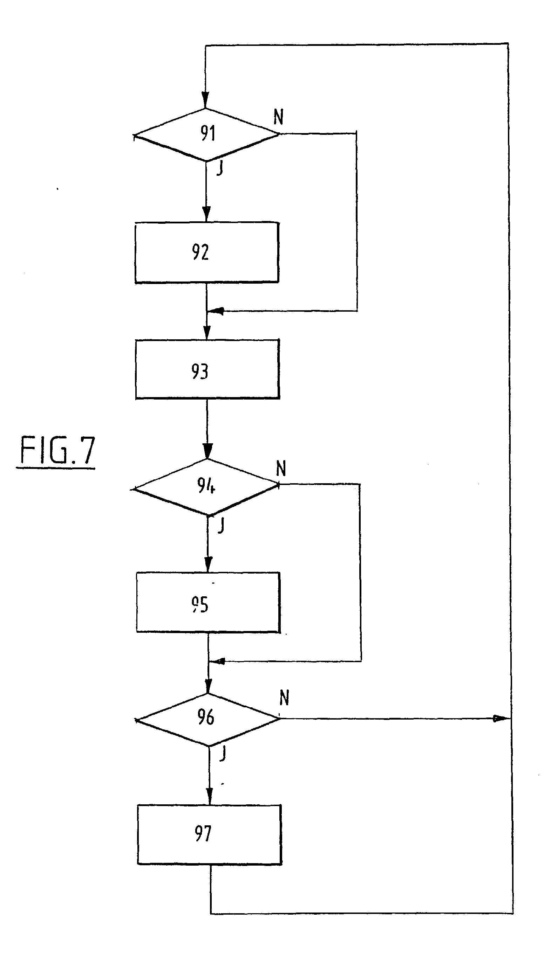

The control of the processes proceeds synchronously with displacement of the diabolo-shaped transporting elements 23. Computer 77 can contain a special co-processor for this purpose, in which for each cycle wherein the chain with transporting elements shifts up precisely one position the same control pattern is generated. A shift register is updated in the co-processor. The co-processor runs through a program wherein a check is first made whether a new message has been received from computer 77 (block 91, figure 7). Should this be the case, the shift register is then adapted with the commands associated with the decisions taken at that moment by computer 77 concerning whether or not the product is processed (block 92). Reading of the count of the encoder otherwise proceeds immediately, whereby the momentary position of the transporting elements is determined (block 93). A check is subsequently made whether a cycle has begun (block 94). If this is the case, the control is reset to zero (block 95). The control table is then checked and it is determined whether a new value has to be transmitted (block 96). If this is not the case, the program returns to block 91, while otherwise the required value is generated (block 97).

In the above stated manner products, in particular spherical or tuberiform agricultural products such as sprouts, can be subjected rapidly, simply and with high precision to a desired process, wherein the reject percentage is very low. By making use of an optical detection of different sides of the products and an electronic processing of this detection, the presence and position of the supplied products can be determined in reliable manner, whereafter they can be either processed or not on the basis of this detection and can be automatically separated into processed and non-processed products.

Although the invention is elucidated with reference to one embodiment, it will be apparent that many modifications are possible within the scope of the invention. Thus, the invention in general is limited to spherical or tuberiform agricultural products, but may also be used in connection with e.g. industrial products of various shapes and sizes.

Furthermore, instead of the shown processing device with a single set of cutting members, it is also possible to envisage a processing device with a plurality of sets of cutting members at different interspacing, so that larger and smaller products could be processed as required. In addition, the post-processing could also take place in a manner other than by rubbing, for instance using a medium under pressure such as compressed air. Other ways can also be envisaged of lifting the products at the position of the detecting device. The supports 25 could thus be pivotable relative to the chain 26, whereby the diabolos 23 could be carried for instance along an elevated guide path at the position of detecting device 5. It will further be apparent that, although only a single transport path is shown here, it will be possible in practice to connect a number of transport paths in parallel in order to increase the processing capacity.

The scope of the invention is therefore defined solely by the claims appended hereto.

## Claims

1. Method for processing a collection of products, comprising of isolating the products in the collection, detecting the shape and/or the size of each product and processing each detected product subject to the detected shape and/or size, wherein the isolating and processing is performed mechanically and the detection electronically.

2. Method as claimed in claim 1, **characterized in that** after processing the products are separated mechanically into processed and non-processed products.

3. Method as claimed in claim 1 or 2, **characterized in that** the processing is a cutting operation, the position of the product is determined during the detection and an end part of the product is cut off depending on the determined position.

4. Method as claimed in any of the foregoing claims, **characterized in that** each product is oriented before detection.

5. Method as claimed in any of the foregoing claims, **characterized in that** each processed product is subjected to a post-processing.

6. Method as claimed in claim 5, **characterized in that** an outer layer of the product is removed in the post-processing.

7. Method as claimed in claim 6, **characterized in that** the outer layer of the product is rubbed.

8. System for processing a collection of products, comprising a device for isolating the products in the collection, a device placed in series with the isolating device for detecting the shape and/or size of each product, which detecting device is connected for signal generation to means for controlling the processing, and a device for processing each detected product which is placed in series with the detecting device and connected controllably to the control means.

9. System as claimed in claim 8, **characterized by** a device for separating the products into processed and non-processed products which is placed in series with the processing device and connected controllably to the control means.

10. System as claimed in claim 8 or 9, **characterized in that** the processing device is a cutting device with at least two controllable cutting members and the control means are adapted to determine from the detection the position of each product and to operate at least one of the cutting members subject to the determined position.

11. System as claimed in any of the claims 8-10, **characterized by** means arranged between the isolating device and the detecting device for orienting the isolated products.

12. System as claimed in claim 11, **characterized in that** the orienting means comprise diabolo-shaped transporting elements.

13. System as claimed in any of the claims 8-12, **characterized by** a device placed in series with the processing device for subjecting each processed product to a post-processing.

14. System as claimed in claim 13, **characterized in that** the post-processing device is adapted to remove an outer layer of the product.

15. System as claimed in claim 14, **characterized in that** the post-processing device comprises at least one rubbing element.

16. System as claimed in claim 15, **characterized in that** the rubbing element is a circulating belt.

17. System as claimed in any of the claims 10-16, **characterized in that** the isolating device comprises transporting elements which are each adapted to transport a single product.

18. System as claimed in claim 17, **characterized in that** the transporting elements form compartments of a compartment conveyor.

19. System as claimed in claim 17 or 18, **characterized by** means for removing an excess of products from the transporting elements.

20. System as claimed in claim 19, **characterized in that** the removing means comprise a movable pusher member.

21. System as claimed in claim 20, **characterized in that** the pusher member is synchronized with the compartment conveyor.

22. System as claimed in any of the claims 10-21, **characterized in that** each cutting member is movable between a rest position and an operating position in which it protrudes into the transport path of the products.

23. System as claimed in claim 22, **characterized in that** each cutting member is arranged on a pivot arm.

24. System as claimed in claim 22 or 23, **characterized in that** each cutting member comprises a rotatable cutting blade.

25. System as claimed in any of the claims 8-24, **characterized in that** the detecting device comprises at least one camera directed at the transport path of the products.

26. System as claimed in claim 25, **characterized in that** the detecting device comprises at least one mirror arranged along the transport path of the products in the field of view of the camera.

27. System as claimed in claim 26, **characterized by** at least two mirrors arranged on either side of the transport path.

28. System as claimed in any of the claims 25-27, **characterized in that** the detecting device comprises exposure means.

29. System as claimed in any of the claims 25-28, **characterized in that** the control means are adapted to scan a recorded image made by the camera and to determine therefrom the shape and/or size of the product.

30. System as claimed in claim 29, **characterized in that** the control means are connected to a sensor detecting the transporting speed of the products through the system and are adapted to search for the product in the recorded image on the basis of a signal from this sensor.

31. System as claimed in claim 29 or 30, **characterized in that** the control means are further adapted to determine from the recorded image the position of the detected product.

32. System as claimed in claim 31, **characterized in that** the control means are adapted to determine the shape and/or size of the detected product from a first part of the recorded image and to determine the position thereof from a second part of the recorded image.

33. System as claimed in any of the claims 8-32, **characterized by** a number of mutually parallel isolating devices, detecting devices and processing devices.

34. Isolating device evidently intended for use in a system as claimed in any of the claims 8-33.

35. Detecting device evidently intended for use in a system as claimed in any of the claims 8-33.

36. Processing device evidently intended for use in a system as claimed in any of the claims 8-33.

37. Control means evidently intended for use in a system as claimed in any of the claims 8-33.

38. Separating device evidently intended for use in a system as claimed in any of the claims 8-33.

39. Post-processing device evidently intended for use in a system as claimed in any of the claims 13-33.
